# EUROPEAN PATENT APPLICATION

(11) **EP 4 851 033 A1**
(43) Date of publication of application: **09.12.2026**
(21) Application number: 25181177.4
(22) Date of filing: 05.06.2025
(51) Int. Cl.: B62M 9/10, F16H 55/30

(54) **SPROCKET HAVING WIDE AND NARROW TEETH, IN PARTICULAR CHAINRING**

(71) Applicant: Miranda & Irmão, Lda., 3750-871 Águeda (PT)
(72) Inventor: Tavares Miranda, João Filipe, 3754-909 Águeda (PT)
(74) Representative: Freischem & Partner Patentanwälte mbB

(57) **Abstract**

A sprocket for engagement with a drive chain comprises:
• a plurality of teeth extending radially from a periphery of the sprocket;
• the plurality of teeth including a first and a second group of teeth, wherein the teeth of the first group and the second group are alternately arranged so that each tooth of the first tooth group is followed by a tooth (16') of the second group, and vice versa;
• each tooth of the first group of teeth having a first maximum width;
• each tooth (16') of the second group of teeth having a second maximum width which is larger than the first maximum width;
• each tooth (16') of the second group of teeth having a protrusion (17') on each of the lateral faces of the tooth (16'), wherein the protrusion (17') extends in a front portion of the respective lateral face of the tooth (16') and wherein the tooth has chamfered front edges and a chamfered tip (25).

**In** order to improve the performance of the sprocket when the chain line is not straight, the outer lateral surface (27) of the protrusion (17') extending parallel to the central plane of the sprocket (11') has a narrow tip (28) at its upper end where the chamfer (22') of the front edge meets the chamfer (29) of the tooth tip (25).

## Description

### Technical field

The present invention relates to a sprocket for engagement with a drive chain and more particularly to a chainring for a bicycle.

The sprocket comprises:
- a plurality of teeth extending radially from a periphery of the sprocket;
- each tooth extending over a given circumferential length of the sprocket;
- each tooth having a front face for contacting a roller of the drive chain in regular drive operation and a rear face;
- the plurality of teeth including a first group of teeth and a second group of teeth, wherein the teeth of the first group and the second group are alternately arranged so that each tooth of the first tooth group is followed by a tooth of the second group, and vice versa;
- each tooth of the first group of teeth having a first maximum width;
- each tooth of the second group of teeth having a second maximum width which is larger than the first maximum width;
- each tooth of the second group of teeth having a protrusion on each of the lateral faces of the tooth, wherein the protrusion extends in a front portion of the respective lateral face of the tooth of the second group of teeth;
- each tooth of the second group of teeth having chamfered front edges and a chamfered tip.

Sprockets and in particular chainrings with alternating narrow and wide teeth have been proposed for the purpose of improving the guidance of the chain on the teeth of the sprocket. The drive chain of a vehicle like a bicycle comprises a succession of rollers connected by chain links. Each chain link is composed of a pair of link plates fixed to the axial ends of the rollers. The ends of two link plates are fixed to each axial end of a roller by means of a pin. A pair of inner link plates contacts the roller and a pair of outer link plates contacts the inner link plates. Consequently, due to the alternating succession of inner link plates and outer link plates, the lateral distance between the link plates of a chain varies in an alternating manner. The sections of the clear spaces between the inner link plates are of rectangular shape, the front end and rear end being defined by the rollers to which the link plates are attached. The sections of the clear spaces between the outer link plates have the shape of a cross or a + with smaller portions adjacent to the rollers defined by the ends of the inner link plates and a wider portion in the middle. The width of the wider portion corresponds to the distance between the outer link plates.

It has been found that the use of alternating narrow and wide teeth on a chainring provides for better guidance and engagement of the chain. This is of particular importance when a single chainring driven by cranks of a bicycle is combined with multiple sprockets fixed to the rear wheel of the bicycle in order to provide different gears. Moreover, shocks and vibrations that occur while riding on difficult terrain risk to disengage the chain from the teeth of the sprockets. Teeth that have a width closely matching the width of the spaces between the chain links have proven to be less likely to disengage due to shock or vibrations.

### Background art

In the recent past, a number of chainrings with alternating narrow and wide teeth have been proposed for the purpose of improving the chain drive of bicycles.

US 2002/0098934 A1 and WO 03/0095867 A1 describe early versions of such chainrings. A series of patent applications based on European patent application EP 2 602 176 A1 defines specific features of such chainrings, i.e. divisional applications EP 3 075 644 A1, EP 3 072 799 A1, EP 3 072 800 A1, EP 3 072 801 A1, EP 3 072 802 A1, EP 3 072 803 A1. The wide teeth with the protrusions of these patent applications basically have a cross shaped section that matches the cross shaped section of the respective link space in which they are to be accommodated.

The applicant owns a plurality of European patents for chainrings with alternating narrow and wide teeth, namely EP 3 634 845 B3, EP 3 831 705 B1 and EP 3 621 870 B1.

The latter EP 3 621 870 B1 discloses a sprocket as described above. Each wide tooth has a protrusion on each of the lateral faces of the tooth, wherein the protrusion extends in a front portion of the respective lateral face of the tooth. This prior art embodiment will be explained in order to better understand the new proposal described herein.
Figs. 1 - 5 show the drawings of EP 3 621 870 B1 and the description of EP 3 621 870 B1 follows below.
Fig. 1 shows a schematic view of a drive chain of a bicycle;
Figs. 2 to 4 show a top section of a sprocket of EP 3 621 870 B1, wherein Fig. 3 and Fig. 4 show identical side views of the sprocket and Fig. 2 depicts the sections of the teeth of the sprocket of Fig. 3 cut along line B-B which follows the lines connecting the axes of rollers of a chain engaging the sprocket; and
Fig. 5 shows a sectional view of the chain of Fig. 1 with the engaged teeth of the sprocket of Fig. 2 to Fig. 4.

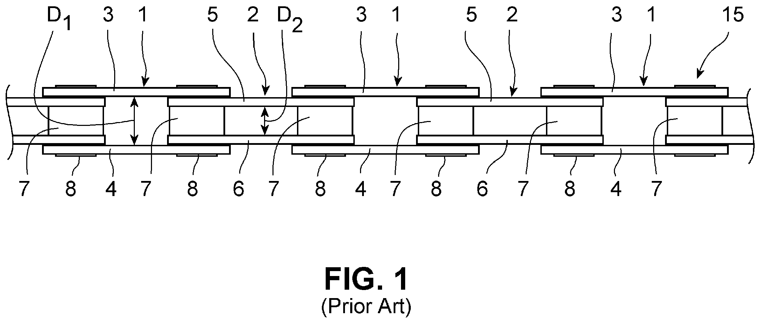

Fig. 1 shows a top view of a stretched roller chain as conventionally used for driving a bicycle or an e-bike. The drive chain is composed of a succession of outer chain links 1 followed by inner chain links 2. Each outer chain link 1 is composed of two outer link plates 3 and 4. The inner faces of the outer link plates 3 and 4 contact the outer faces of inner link plates 5 and 6, which form the inner chain link 2. The inner faces of the inner link plates 5 and 6 contact a roller 7 at each end of the inner chain links 5 and 6. A pin 8 extends through holes in the end sections of the outer link plates 3, 4, and inner link plates 5, 6, as well as through the roller 7. The ends of the pins 8 are deformed in order to securely fix the link plates 3 - 6 to the rollers 7. It can be seen in Fig. 1 that the drive chain has a succession of link spaces with a large width D1 between the outer link plates 3, 4, and link spaces with a smaller width D2 between the inner link plates 5, 6.

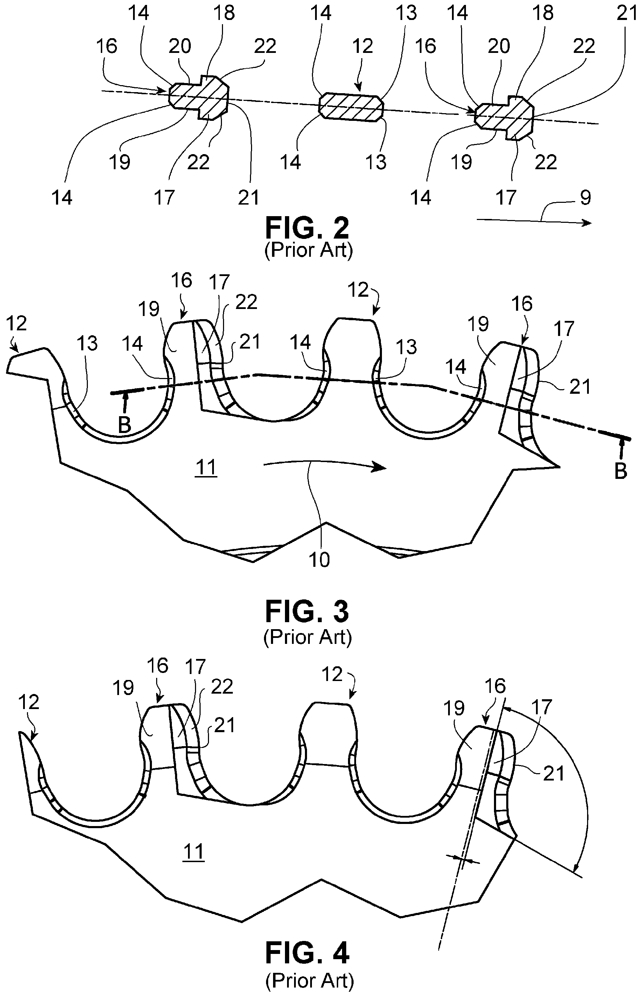

Fig. 2 to Fig. 4 explain the structure of the sprocket described in EP 3 621 870 B1. The sprocket may be a single chainring that may be fixed to a crank of a bicycle or to a spindle of a bottom bracket, often via a spider or via an interface. The arrows 9 and 10 in Fig. 2 and 3 indicate the direction of rotation during regular drive operation of the sprocket 11 when driven by the crank in order to move the bicycle forward. This direction corresponds to the circumferential direction of the sprocket. The head of each of the arrows 9 and 10 indicates the forward direction of the teeth on the upper part of the sprocket 11 shown in Fig. 3 and Fig. 4. The front face of the teeth contacts the rollers 7 of the chain 15 during such drive operation and is located on the right side of each tooth shown in Figures 2, 3 and 4. Fig. 2 shows sectional views of the two different varieties of teeth of the sprocket 11 cut along the line B - B in Fig. 3. The line B - B is defined by straight lines connecting the axes of the two rollers of a chain link accommodated by the spaces between the teeth of the sprocket.

The sprocket 11 has two different kinds of teeth 12, 16 which alternate. The first group of teeth are narrow teeth 12 that have a small width and a basically rectangular section in a plane perpendicular to this radial center line of each tooth 12. The tip of each narrow tooth 12 is chamfered or rounded so that the width of the narrow tooth 12 decreases in the direction towards the tip of the tooth 12. The narrow teeth 12 have a front face on the right side contacting the roller in regular drive operation and a rear face on the left side in the drawings. Both the front face and the rear face are provided with a chamfer 13, 14, in order to avoid physical contact with the inner chain links 5, 6 of the chain 15 and to provide a gap between the inner chain links 5,6 and the faces for easy penetration of the teeth. A wide tooth 16 is arranged between each pair of narrow teeth 12. The wide tooth 16 has a protrusion 17, 18 on each lateral face 19, 20. The rear portions of the lateral faces 19, 20 of the wide teeth 16 are plane. The protrusion 17, 18, basically extends over the portion of the tooth adjacent the front face 21 of the wide tooth 16. The protrusion 17,18 generally covers the front half of the lateral face 19, 20 of the wide tooth 16. As can be seen in Fig. 4, the protrusion ends a short distance of approximately 0.3 millimeters from the centerline of the wide tooth 16.

In the direction towards the center of the sprocket 11, the protrusion 17,18 reaches a straight line tangent to the radius of the space between the protrusion 17, 18 and the adjacent narrow tooth 12. The angle between the bottom edge of the protrusion 17 visible on the right-hand side of Figure 4 and the central edge of the protrusion 17 is approximately 105°.

As can be seen in Fig. 2 and Fig. 4, the wide tooth 16 has a chamfer 22 at the edges of each of the protrusions 17, 18, facing the roller 7 of the chain 15. Again, this chamfer 22 avoids physical contact between lateral parts of the chain 15 and the protrusions 17, 18. The chamfer 22 at each of the front edges of the wide tooth 16 extends over 1 mm in the circumferential direction of the sprocket 11 and over 0.75 mm in the lateral direction. The rear chamfer 14 on the edges of each wide tooth 16 corresponds to the rear chamfer 14 on the edges of each narrow tooth 12 and has a lateral and circumferential extension of +0.5 mm.

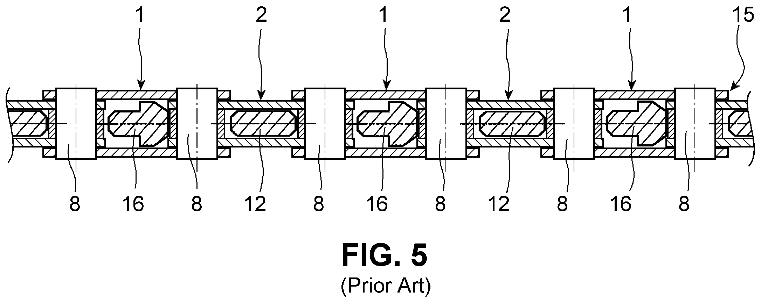

Fig. 5 shows the engagement of the teeth 12 and 16 of the sprocket 11 in the link spaces of the chain 15. Figure 5 is a sectional view of the chain 15 and the sprocket taken along straight lines extending between the axes of the rollers 7 or pins 8 of the chain 15. It can be seen that the wide teeth 12 have a somewhat T-shaped form. The wide part only extends over the front portion of the wide teeth 16. The rear portion of the wide teeth 16 has basically the same width as the narrow teeth 12. The extended width of the wide teeth 16 provides for good guidance of each tooth in the chain link spaces between the outer link plates 3, 4. At the same time, the wide tooth 16 does not occupy the entire link space. In case of a clogging of the link space, the tooth can more easily enter the link space compressing any dust or soil into the free spaces. Nevertheless, the front part of the wide tooth 16 has an increased stability and provides the necessary lateral guidance for securely engaging with the chain 15.

While the tooth profile of EP 3 621 870 B1 as described above provides for good lateral guidance and support of the wide teeth when the chain follows a straight chain line as indicated in Figures 1 to 5, it may cause problems when the chain line is not straight. A chain line of a chain linking a driving front sprocket with a rear driven sprocket is straight if the central planes of both sprockets are the same, i.e. if the sprockets and the teeth of the sprocket extend in the same plane. Many bicycles have a gearing system called derailleur system that moves the chain between multiple parallel sprockets. At the position of the bottom bracket, two or 3 parallel sprockets are commonly mounted to the spindle of the bottom bracket. Mountain bikes generally have only one front sprocket fixed to the bottom bracket. In the rear, cassettes of 7 to 10 and in particular for mountain bikes up to 13 sprockets are mounted to the axle of the rear wheel of a bicycle. As the distance between the plane of the front sprocket and the rear sprocket in the direction of the spindle of the bottom bracket grows, the chain line has an increasing angle compared to a straight line parallel to the central plane of the bicycle.

### Summary of the invention

It is an object of the invention to provide a sprocket with alternating narrow and wide teeth with good guidance of the wide teeth and improved functionality when linking laterally displaced sprockets.

This object is attained in that the outer lateral surface of the protrusion extending parallel to the central plane of the sprocket has a narrow tip at its upper end where the chamfer of the front edge meets the chamfer of the tooth tip.

With modern mountain bike drives having a single sprocket fixed to the spindle of the bottom bracket and a cassette of 13 sprockets at the rear wheel, the earlier tooth design has proven to create problems since there was increased friction between the outer lateral surface of the protrusion and the inner surface of the chain links when the chain line was not straight. This increased friction was most dominant in the radially outer areas near the tip of each tooth of the outer lateral surface of the protrusion. The new shape of the wide teeth considerably reduces this friction. It is proposed to reduce the length in the circumferential direction of the outer lateral surface of the protrusion. The outer lateral surface of the protrusion extends in a plane parallel to the central plane of the sprocket. The circumferential extension of the outer lateral surface of the protrusion in the direction of rotation of the sprocket is generally reduced so that at the upper end of this outer lateral surface of the protrusion forms a thin or narrow tip at the position where the chamfer of the front edge meets the chamfer of the tooth tip. The tip is preferably quite sharp so that the chamfer of the front edge extends over most of the front half of the tooth's circumferential extension in the area where the chamfer of the front edge meets the chamfer of the tooth tip.

In practice, each tooth of the second group of teeth may have its root point on a root circle connecting the minima of the radial extensions of the sprocket between the teeth, wherein the height of each tooth of the second group of teeth extends from its root point to the tip of the tooth in the radial direction of the sprocket, and wherein the outer lateral surface of the protrusion extends from the root point of the tooth up to 65% of the height or less. This means that a tip portion of the tooth extending over at least 35% of the height of the tooth is provided with a tip chamfer. The long tip chamfer provides for an unhindered engagement and exit of the tooth from the link spaces. The long front edge chamfer maintains this unhindered engagement and exit even with a chain line that has a considerable angle to the straight direction (parallel to the central plane of the bicycle).

In practice, the chamfer of the front edge of each tooth of the second group extends over 40% or more of the circumferential extension of the tooth where the chamfer of the front edge meets the chamfer of the tooth tip. The fact that the chamfer of the front edge extends over 40% of the lateral face of the tooth while the protrusion only extends over approximately half of the tooth length shows that the circumferential length of the protrusion is very small. Nevertheless, the lateral protrusion is still sufficiently prominent to provide for lateral guidance of the wide teeth.

In practice, the chamfer of the front edge of the tooth can run at a very small angle with respect to the central plane of the sprocket. The chamfer of the front edge of the tooth may extend at an angle of less than 30°, preferably less than 25° and more preferably approximately 20° with respect to the central plane of the sprocket. As a result, it extends over 40% or more of the circumferential extension of the tooth. The older design known from the state of the art had a much steeper chamfer extending at more than 35° with respect to the central plane of the sprocket and extended over approximately 25% of the length of the tooth in the circumferential direction of rotation of the sprocket.

In a practical embodiment, the tip of each tooth of the first group of teeth is displaced from the central plane of the sprocket towards the central plane of the bicycle. In modern electrical mountain bikes, it is common to use very large tires. It is necessary to maintain a safety distance between the tire and the chain, so the sprockets on the bottom bracket are moved outwardly, away from central plane of the bicycle in the direction of the axis of the bottom bracket. It has proven advantageous to move the tip of the narrow teeth slightly away from the central plane of the sprocket towards the central vertical plane of the bicycle. This provides for a safer and smoother engagement of the narrow teeth when entering and leaving the link spaces.

### Brief description of drawings

The features and advantages of the new tooth shape will be more fully understood from the following description of an embodiment of the invention, in conjunction with the accompanying drawings.

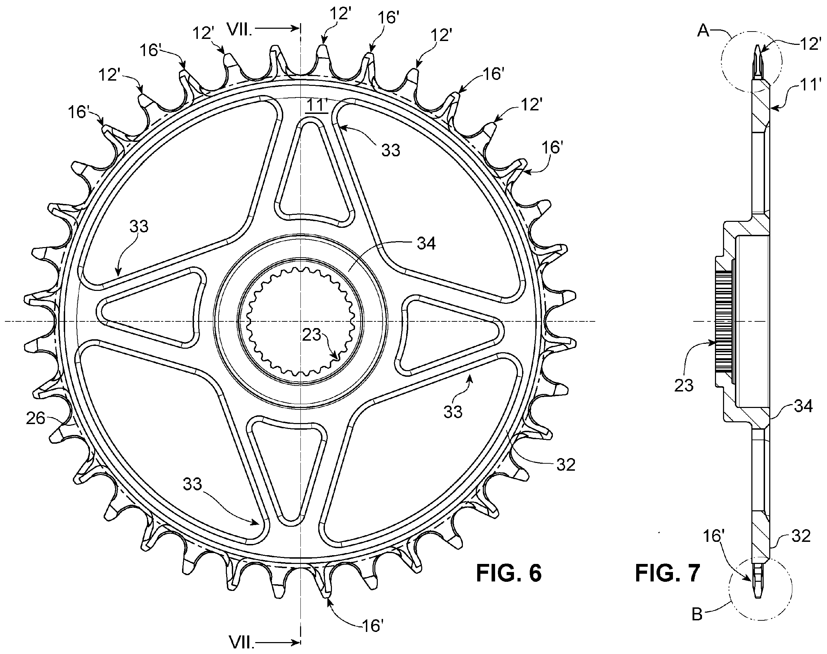

Fig. 6 shows a plan side view of the sprocket of the invention.
Fig. 7 shows a sectional view cut along the line VII. - VII. In Fig. 6

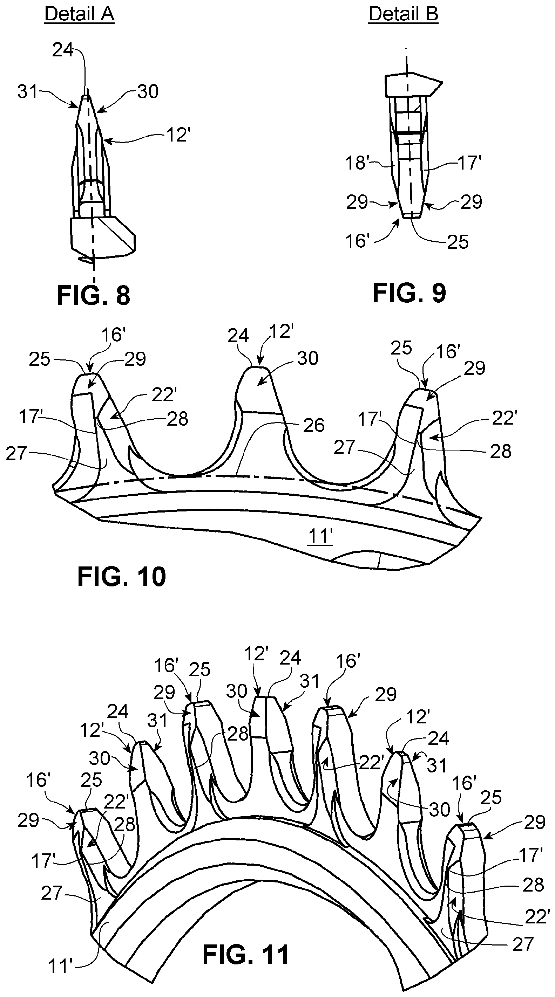

Fig. 8 shows an enlarged view of detail A in Fig. 7.
Fig. 9 shows an enlarged view of detail B in Fig. 7.
Fig. 10 shows an enlarged side view of the top three teeth of the sprocket of Fig. 6.
Fig. 11 shows an enlarged perspective view of the top row of teeth of the sprocket of Fig. 6.

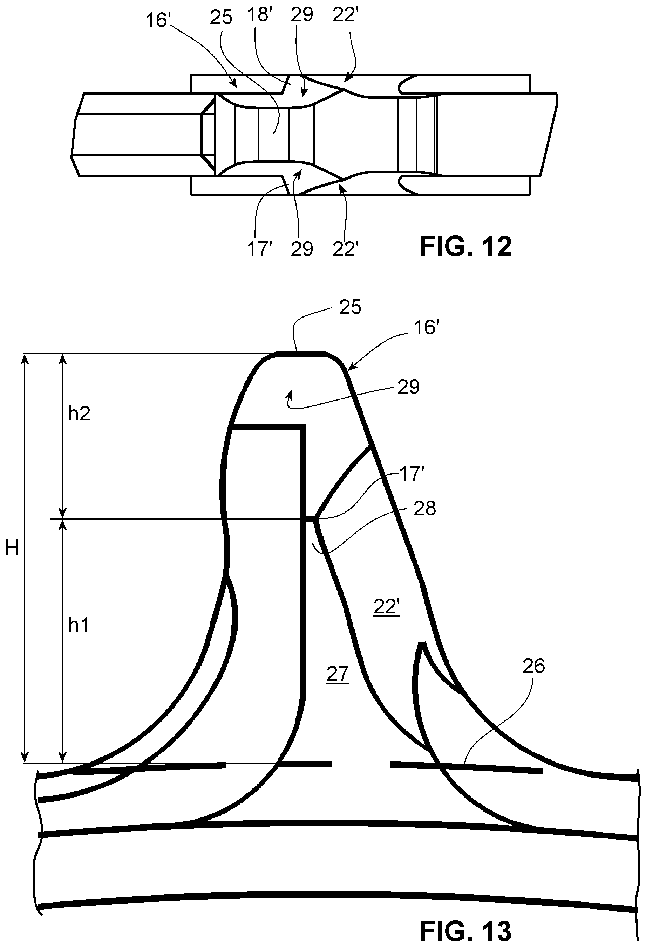

Fig. 12 shows top view of a wide tooth.
Fig 13 shows an isolated side view of the wide tooth of Fig. 12.

The sprocket 11' shown in Fig. 6 to Fig. 13 comprises a succession of alternating wide teeth 16' and narrow teeth 12' evenly spaced about its circumference and extending radially from a ring section32 of the sprocket 11'. The sprocket 11' comprises four linkages 33 rigidly connecting the outer ring section 32 to an inner ring section 34 having an interface 23. The interface may be connected to a crank or to the spindle of a bottom bracket. It is to be noted that the structure of the sprocket is just described as an example. The sprocket may have a different design. It may, for example, be a simple chain ring to be connected to a spider or to a crank.

Fig. 7 shows a sectional view of the sprocket 11' of Fig. 6. The section is taken along the line VII. - VII. in Fig. 6 so that the view at the top of the sprocket 11' shows a narrow tooth 12' and the view at the bottom of the sprocket 11' shows a wide tooth 16'. Fig. 8 shows an enlarged view of the detail A in Fig. 7 with a view on the rear side of a narrow tooth 12' of the sprocket 11'. It can be seen that the tip 24 of the narrow tooth 12' is slightly displaced from the central plane of the sprocket 11' towards the central plane of the bicycle. This displacement leads to a frictionless engagement of the chain even if the sprocket 11' fastened to the bottom bracket spindle is displaced outwardly, i.e. away from the central plane of the bicycle.

Both the tip 24 of the narrow tooth 12' and the tip 25 of the wide tooth 16' comprise steep chamfers that extend at an angle of less than 20°, preferably less than 15°, with respect to the vertical central plane of the sprocket 11'. The resulting sharp tips 24 and 25 of the narrow teeth 12' and the wide teeth 16' easily penetrate into the link spaces between the chain links even if the link spaces are filled with mud. The wide teeth 16' are symmetrical to their vertical central plane .Thus, the camfers 29 on both sides of the wide tooth 16' are symmetrical to this vertical central plane, as can be seen in Fig. 9. The narrow teeth 12' are not symmetrical to the vertical central plane as their tip 24 is displaced with respect to this central plane. In Fig. 8 the tip 24 is displaced to the left. This is achieved by providing a short chamfer 31 on the left side of the tooth tip 24 and a long chamfer 30 on the right side of the tooth tip 24.

The new shape of the wide tooth can be seen in particular in Figures 11 -13. It can be seen that the wide tooth has a large camfer 22' in the region of its front edge in comparison to the front chamfer 22 of the earlier version shown, for example in Fig. 4 and Fig. 5. While the chamfer of the earlier version had an angle of approx. 50° with respect to the circumferential direction of the tooth, the chamfer 22' of the new tooth design extends at an angle of 20° and less with respect to the circumferential direction, i.e. with respect to the vertical plane of the sprocket 11'. As a result, the chamfer 22' of the new tooth design extends over approximately 40% of the length of the tooth 22' in the circumferential direction. Considering that the protrusion extends over approximately half of the length of the tooth 16', this long and shallow chamfer on the side face of the tooth 16' leaves only a narrow portion of an outer lateral surface 27 of the protrusion 17' of the wide tooth 22', which extends over less than 10% of the length of the tooth 16' and forms a narrow tip 28 of the outer lateral surface 27 of the protrusion 17'. This new shape of the protrusion 17' has two positive effects. When entering a link space that is filled with mud, the narrow tip 28 of the outer lateral surface 27 of the protrusion 17' and consequently the protrusion 17' itself can easily enter the link space and engage with the chain. When the chain line is not straight, i.e. the chain line is at an angle to the circumferential direction or the vertical plane of the sprocket 11' the long chamfer 22' on the front edges of the wide tooth 16' avoid physical contact between the front area of the tooth 16' and the outer link plates. This reduces wear of the chain and friction between the chain and the wide teeth 16'.

Figures 6, 10 and 13 show a fictional root circle 26 in dotdashed lines. The root circle connects the minima of the radial extensions of the sprocket between the teeth where the roller 7 of the chain rests between two teeth. Fig. 13 shows an enlarged view of a single wide tooth 16'. The height H of the wide tooth 16' measured from the root point where the vertical central line of the wide tooth 16' meets the root circle 26 can be seen, as well as the height h1 of the lateral surface of the protrusion and the height h2 of the tip chamfer 29 of the wide tooth 16'. It can be seen that the height h2 of the outer lateral surface 27 of the protrusion extends from the root point of the tooth up to less than 65% of the height H of the tooth, preferably approximately 60% of the height H of the tooth..

### List of reference numbers

- 1: outer chain link
- 2: inner chain link
- 3: outer link plate
- 4: outer link plate
- 5: inner link plate
- 6: inner link plate
- 7: roller
- 8: pin
- 9: direction of rotation
- 10: direction of rotation
- 11,11': sprocket
- 12,12': narrow tooth
- 13,13': chamfer
- 14,14': chamfer
- 15,15': chain
- 16,16': wide tooth
- 17,17': protrusion
- 18,18': protrusion
- 19,19': lateral face
- 20,20': lateral face
- 21,21': front face
- 22,22': chamfer
- 23: interface
- 24: tip of narrow tooth
- 25: tip of wide tooth
- 26: root circle
- 27: outer lateral surface
- 28: tip
- 29: chamfer of wide tooth tip
- 30: chamfer of narrow tooth tip
- 31: Chamfer of narrow tooth tip
- 32: outer ring section
- 33: linkage
- 34: inner ring section

- D₁: great width
- D₂: smaller width
- H: height of the wide tooth
- h₁: height of the outer lateral surface of the protrusion
- h₂: height of the tooth tip

## Claims

1. A sprocket (11') for engagement with a drive chain (15), comprising:
• a plurality of teeth (12'; 16') extending radially from a periphery of the sprocket (11');
• each tooth (12'; 16') extending over a given circumferential length of the sprocket (11');
• each tooth (12'; 16') having a front face for contacting a roller (7) of the drive chain (15) in regular drive operation and a rear face;
• the plurality of teeth (12';) including a first group of teeth (12') and a second group of teeth (16'), wherein the teeth of the first group and the second group are alternately arranged so that each tooth (12') of the first tooth group is followed by a tooth (16') of the second group, and vice versa;
• each tooth (12') of the first group of teeth having a first maximum width;
• each tooth (16') of the second group of teeth having a second maximum width which is larger than the first maximum width;
• each tooth (16') of the second group of teeth having a protrusion (17',18') on each of the lateral faces of the tooth (16'), wherein the protrusion (17',18') extends in a front portion of the respective lateral face of the tooth (16') of the second group of teeth;
• each tooth (16') of the second group of teeth having chamfered front edges and a chamfered tip (25);
**characterized in that** the outer lateral surface (27) of the protrusion (17', 18') extends parallel to the central plane of the sprocket (11') has a narrow tip (28) at its upper end where the chamfer (22') of the front edge meets the chamfer (29) of the tooth tip (25).

2. The sprocket (11') of claim 1, **characterized in that** each tooth (16') of the second group of teeth has its root point on a root circle (26) connecting the minima of the radial extensions of the sprocket (11') between the teeth (12', 16'), wherein the height (H) of each tooth (16') of the second group of teeth extends from its root point to the tip (25) of the tooth (16') in the radial direction of the sprocket (11), and wherein the outer lateral surface (28) of the protrusion (17', 18') extends from the root point of the tooth (16') up to 65% of the height (H) or less.

3. The sprocket (11') of any of the preceding claims, **characterized in that** the chamfer (22') of the front edge of each tooth (16') of the second group extends over 40% or more of the circumferential extension of the tooth (16') where the chamfer (22') of the front edge meets the chamfer (29) of the tooth tip (25).

4. The sprocket (11') of any of the preceding claims, **characterized in that** the chamfer (22') of the front edge of the tooth (16') extends at an angle of less than 30°, preferably less than 25° and more preferably approximately 20° with respect to the central plane of the sprocket (11').

5. The sprocket (11') of any of the preceding claims, **characterized in that** the tip (24) of each tooth (12') of the first group of teeth is displaced from the central plane of the sprocket (11') towards the central plane of the bicycle.
